# EUROPEAN PATENT APPLICATION

(11) **EP 2 547 167 A1**
(43) Date of publication of application: **16.01.2013**
(21) Application number: 11173400.0
(22) Date of filing: 11.07.2011
(51) Int. Cl.: H04W 80/10, H04W 4/02, H04W 64/00

(54) **Method and system for location based services using parameterization**

(71) Applicant: Koninklijke KPN N.V., 2516 CK The Hague (NL)
(72) Inventor: Mancevska, Elena, 2272 TS Voorburg (NL); Hiep, Maurice, 2241 KK Wassenaar (NL)
(74) Representative: Wuyts, Koenraad Maria

(57) **Abstract**

Methods and systems for location based services and/or location services are disclosed. A hunting process may be used to determine the address or identity of the serving routing node. The messages sent to the routing node to determine location information associated with a user or user equipment may be parameterized to initiate a modified response logic in the routing node.

## Description

### FIELD OF INVENTION

The invention generally relates to methods and systems for obtaining location information associated with user equipment. In particular, though not necessary, methods and systems for enabling location based services to obtain the unique identification associated with a base transceiver station to which the user equipment is connected to.

### BACKGROUND

Location Services (LCS) over networks provide an estimate on a user's location such that a location service client may utilize the location estimate to provide Location Based Services (LBS). One example of Location Based Services is to provide content (e.g., informational, advertising, etc.) to the user based on and targeted to the location of the user.

A prominent example of LBS is to provide enhanced emergency services. Governments and authorities issue mandates for network operators to provide the location of a user or the user equipment when the user calls an emergency response agency (e.g., police, fire, etc.). The location information assists the response agency to dispatch services to the user more efficiently.

Current solutions, such as the one described in the 3^{rd} Generation Partnership Project ("Functional stage 2 description of Location Services (LCS) (Release 10)" 3GPP TS 23.271 V10.0.0.0 (2010-06) and "Mobile Application Part (MAP) Specification" (Release 9) 3GPP TS 29.002 V9.1.0 (2010-03)), may not meet outstanding mandates from governments and authorities. For example, the government may require that LBS be applicable to more users (including inbound roaming users of the network), and known solutions do not work for all users and/or equipment that do not support LBS/LCS. Accordingly, an LBS solution for emergency services is desired to work without regard to the capabilities of the operator to which the roaming user belongs (e.g., whether or not LBS/LCS is supported).

Hence, there is a need in the art for improved methods and systems for location based services that can eliminate or at least alleviate these problems.

### SUMMARY

It is an object of the invention to reduce or eliminate at least one of the drawbacks in the prior art.

In some embodiments, the invention involves a hunting procedure between a gateway routing node and at least one routing node in the network. The hunting procedure may involve the transmission of at least one message, serially or substantially in parallel to routing nodes of the network. If the routing node is the serving routing node for the user equipment, the message response may indicate as such to the gateway routing node, and/or provide the location information associated with user equipment (e.g., Cell ID or SAI). If the routing node is a non-serving routing node for the user equipment, then the routing node may indicate as such and/or return an error to the gateway routing node.

Based on the response(s) received in the hunting method, the serving routing node may be determined. In other words, the hunting method may bypass the HLR (i.e., messaging to the HLR is optional and not necessary). By avoiding HLR interrogation or messaging, the hunting procedure is applicable and workable to more users including roaming users, since the hunting procedure avoids having to contact the HLR of the foreign operator to which a roaming user belongs.

While the hunting process may solve or alleviate the problem of being able to handle users who do not have a subscription profile in the home location register (HLR) or users whose HLR does not allow interrogation, routing nodes and/or components in the radio access network (RAN) in the network may not support LBS/LCS to support the messaging described. To solve this technical problem, messages may be transmitted to routing nodes and/or components in RAN may be modified to include a (special) parameter such that the appropriate behaviour at the routing node and or components in RAN is initiated. Furthermore, some of routing nodes of the network and/or components in RAN may be reconfigured to operate on a modified response logic. As such, routing nodes and/or components in RAN may respond with the appropriate response messages, even when the routing node and/or components in RAN does not fully support LBS/LCS. The parameterization and modified response logic may be used independently, alone, and/or in addition to the hunting process.

One objective of the parameterization method is to provide a patch to routing nodes and/or components in RAN that do not fully support Location Services such that it can at least support message(s) that enables Cell ID positioning to occur (i.e., by modifying the response logic in a routing node's and/or components in RAN to recognize and act on a new/specific parameter value). At the same time, the parameterization should not disturb the normal behaviour of routing nodes that already support Location Services, such as the MAP Provide Subscriber Location operation.

In some embodiments, a parameter value of a parameter may be selected for the parameterization method such that the parameter value is not recognized in 3GPP TS 29.002 V9.1.0 (2010-03), but the parameter has an exception handling feature that enables the routing node to treat the unrecognized parameter as one of the recognized parameters in 3GPP TS 29.002 V9.1.0 (2010-03).

In some embodiments, the unrecognized parameter value (value not recognized in 3GPP TS 29.002 V9.1.0 (2010-03)) may be propagated or forwarded from the routing node to RAN **9'** in message **m5'** (Location Request). In those embodiments, component(s) in RAN **9'** may be configured with modified response logic to handle the unrecognized parameter, such that the component(s) with or without LBS/LCS can desirably provide a location report back to the routing node.

Method for providing location information, preferably for emergency services, associated with mobile user equipment that is wirelessly communicating via a base station to a network, said network comprising a plurality of routing nodes equipped with visitor location registers is disclosed.

In one embodiment, a message may be received at a routing node from a gateway node for requesting location information associated with the user equipment, said message comprising the identification of the user equipment and a parameter value for a parameter.

In one embodiment, said parameter value may not be recognized in 3GPP TS 29.002 V9.1.0 (2010-03) but the parameter has an exception handling feature in 3GPP TS 29.002 V9.1.0 (2010-03) for treating the unrecognized parameter value as one of the recognized parameter values in 3GPP TS 29.002 V9.1.0 (2010-03).

In one embodiment, in response to recognizing the parameter value in the message, if the visitor location register of the routing node has a database record of the user equipment having roamed into the jurisdiction of the routing node, a response may be transmitted from the routing node to the gateway node, said response including the location information associated with the user equipment in a response to a message for requesting location information associated with the user equipment.

In one embodiment, in response to recognizing the parameter value in the message, if the visitor location register of the routing node does not have a database record of the user equipment having roamed into the jurisdiction of the routing node, a response may be transmitted from the routing node to the gateway node, said response (i) not including the location information associated with the user equipment, and/or (ii) indicating that the user has not roamed into the jurisdiction of the routing node.

In one embodiment, the message may be a Mobile Application Part Provide Subscriber Location message.

In one embodiment, the parameter may be a response time parameter and the parameter value may be "no delay" or "nodelay".

In one embodiment, the response from the routing node to the gateway node may be generated according to a parameter value of "low delay", "lowdelay", "delay tolerant" or "delaytolerant" due to the exception handling feature.

In one embodiment, a location request may be transmitted to a radio access network to which the user equipment is communicably connected, said location request comprising at least one of: type of location information requested in the message, the identification of the user equipment, the parameter value.

In one embodiment, a location report may be received from the radio access network, said location report comprising the location information associated with the user equipment.

In one embodiment, the location request may comprise the parameter value, and the location report received from the radio access network may be generated based at least in part on an exception handling feature in a component of the radio access network for treating the unrecognized parameter value as one of the recognized parameter values in 3GPP TS 29.002 V9.1.0 (2010-03).

In one embodiment, the identification of the user equipment may be the telephone number (MSISDN) associated with the subscriber identity module in the user equipment.

In one embodiment, the location information associated with the user equipment may comprise cell ID or specific location information of the base station, wherein the location information uniquely identifies the base station.

A system for providing location information, preferably for emergency services, associated with mobile user equipment that is wirelessly communicating via a base station to a network, said network comprising a plurality of routing nodes equipped with visitor location registers is disclosed. The system may include a receiving module and a transmitting module.

In one embodiment, a receiving module may be configured to receive, at a routing node, a message from a gateway node for requesting location information associated with the user equipment, said message comprising the identification of the user equipment and a parameter value for a parameter.

In one embodiment, said parameter value may not be recognized in 3GPP TS 29.002 V9.1.0 (2010-03) but the parameter may have an exception handling feature in 3GPP TS 29.002 V9.1.0 (2010-03) for treating the unrecognized parameter value as one of the recognized parameter values in 3GPP TS 29.002 V9.1.0 (2010-03).

In one embodiment, the transmitting module, in response to recognizing the parameter value in the message, if the visitor location register of the routing node has a database record of the user equipment having roamed into the jurisdiction of the routing node, may be configured to transmit a response from the routing node to the gateway node, said response including the location information associated with the user equipment in a response to a message for requesting location information associated with the user equipment.

In one embodiment, the transmitting module further may be further configured to, in response to recognizing the parameter value in the message, if the visitor location register of the routing node does not have a database record of the user equipment having roamed into the jurisdiction of the routing node, transmit a response from the routing node to the gateway node, said response (i) not including the location information associated with the user equipment, and/or (ii) indicating that the user has not roamed into the jurisdiction of the routing node.

Method for retrieving location information, preferably for emergency services, associated with mobile user equipment that is wirelessly communicating via a base station to a network, said network comprising a plurality of routing nodes equipped with visitor location registers, is disclosed.

From a gateway node to a routing node, a message for requesting location information associated with the user equipment may be transmitted, said message comprising the identification of the user equipment and a parameter value for a parameter.

In one embodiment, said parameter value may not be recognized in 3GPP TS 29.002 V9.1.0 (2010-03) but the parameter has an exception handling feature in 3GPP TS 29.002 V9.1.0 (2010-03) for treating the unrecognized parameter value as one of the recognized parameter values in 3GPP TS 29.002 V9.1.0 (2010-03).

In one embodiment, if the visitor location register of the routing node has a database record of the user equipment having roamed into the jurisdiction of the routing node, a response may be received from the routing node to the gateway node, said response including the location information associated with the user equipment in a response to a message for requesting location information associated with the user equipment.

In one embodiment, if the visitor location register of the routing node does not have a database record of the user equipment having roamed into the jurisdiction of the routing node, a response may be received from the routing node to the gateway node, said response (i) not including the location information associated with the user equipment, and/or (ii) indicating that the user has not roamed into the jurisdiction of the routing node.

In one embodiment, from a gateway node to another routing node, another message for requesting location information associated with the user equipment may be transmitted, said another message comprising the identification of the user equipment and a parameter value for a parameter.

The invention may also relate to a computer program product, wherein the computer program product comprises software code portions configured for, when run by a computer, executing the method according to any of the methods described above.

The invention will be further illustrated with reference to the attached drawings, which may schematically show embodiments according to the invention. It will be understood that the invention is not in any way restricted to these specific embodiments.

### BRIEF DESCRIPTION OF THE DRAWINGS

**Fig. 1** shows an illustrative implementation of LBS/LCS according to one embodiment of the invention;
**Fig. 2** shows an illustrative interrogation operation and the operation's arguments and response that may be transmitted between a gateway routing node and a home location register according to one embodiment of the invention;
**Fig. 3** shows an illustrative errors that may be received by the gateway routing node according to one embodiment of the invention;
**Fig. 4** shows illustrative data structure that may be received by the gateway routing node according to one embodiment of the invention;
**Fig. 5** shows an illustrative send routing info operation for LCS and the operation's arguments and response that may be transmitted between a gateway routing node and a home location register according to one embodiment of the invention;
**Fig. 6** shows an illustrative provide subscriber location operation according to one embodiment of the invention;
**Fig. 7** shows illustrative arguments for a provide subscriber location operation according to one embodiment of the invention;
**Fig. 8** shows illustrative data structures according to one embodiment of the invention;
**Fig. 9** shows further illustrative data structures according to one embodiment of the invention;
**Fig. 10** shows an illustrative provide subscriber location response according to one embodiment of the invention;
**Fig. 11** shows an illustrative messaging flow of a LBS/LCS according to one embodiment of the invention;
**Fig. 12** shows an illustrative implementation of LBS/LCS according to one embodiment of the invention;
**Fig. 13** shows an illustrative data structure for initiating an adapted response logic at a routing node, according to one embodiment of the invention;
**Fig. 14** shows an illustrative modified response logic at a routing node, according to one embodiment of the invention; and
**Fig. 15** shows an illustrative messaging flow of a LBS/LCS according to one embodiment of the invention.

### DETAILED DESCRIPTION

One of the methods used for Location Based Services (LBS) or Location Services (LCS) is Cell ID or Specific Location Information (SAI) Positioning. Cell ID may be used for Global System for Mobile Communications (GSM) or SAI may be used for Universal Mobile Telecommunications System (UMTS). For purposes of illustration, cell ID positioning used in GSM is discussed in detail in this disclosure. Cell ID positioning provides the user's location estimate with relatively low delay in comparison to other positioning methods. Thus, it may be suitable for use in emergency services or other types of time critical Location Based Services (LBS) or LoCation Services (LCS).

This disclosure discusses the use of positioning methods and systems to users with mobile user equipment, such as a mobile phone or mobile handheld device. Because the user is typically located in close proximity to the mobile user equipment, the location of the user and the user equipment is considered substantially the same. It is also assumed that the user is associated with the user equipment, for example, in sharing identification or subscription information. For these reasons, references to the user and user equipment are used interchangeably throughout the disclosure.

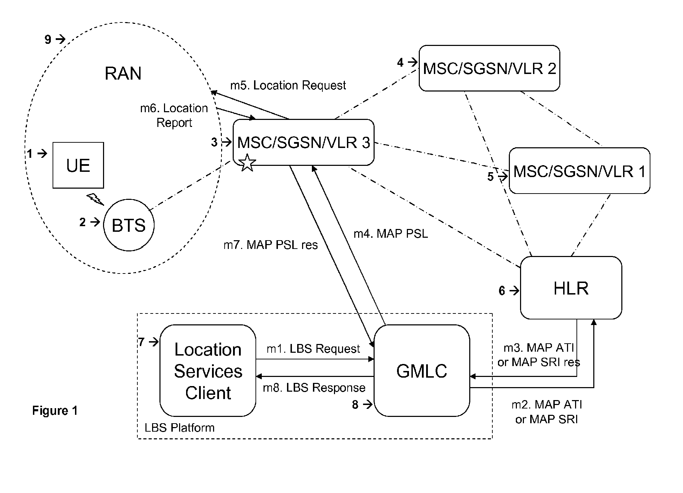

**Fig. 1** shows an illustrative implementation of LBS/LCS according to one embodiment of the invention. The implementation illustrates variations on the basic LBS/LCS solution.

User equipment (UE **1**) seen in **Fig. 1**, is shown to be communicably connected to a base transceiver station (BTS **2**) in a wireless manner. User equipment may be a mobile handset, or a mobile computing/communications device. The user equipment's subscriber identity module (SIM, not shown) may store an identifier that uniquely identifies the cell or sector associated with a base transceiver station to which the mobile handset is currently connected. For example, the identifier may be a GSM cell ID. The cell ID is a generally unique number used to identify each BTS or sector of a BTS within a Location area code (LAC) if not within a GSM network. A base transceiver station may serve at least one cell or sector, and may be associated with a plurality of cell or sector IDs. The record of a cell ID serves as the basis of the cell ID positioning method.

A network may include a network of a plurality of routing nodes. Examples of routing nodes may include: Mobile Switching Center (MSC), Mobile Service Switching Center (MSSC, also referred to as Mobile Switching Center Server or MSC-S), Serving Global General Packet Radio Service Support Node (SGSN). The mobile switching center (MSC) is the primary service delivery node for GSM or Code Division Multiple Access (CDMA), responsible for routing voice calls and SMS as well as other services (such as conference calls, FAX and circuit switched data). The MSSC is a soft-switch variant of the MSC, which provides circuit-switched calling, mobility management, and GSM services to the mobile phones roaming within the area that it serves. SGSN may be an equivalent version of an MSC/MSSC in a GPRS network. A generic routing node having similar or same functions as an MSC/MSSC/SGSN or the equivalents there of is shown as illustratively MSC/SGSN/VLR 1 (routing node **5**), MSC/SGSN/VLR 2 (routing node **4**), MSC/SGSN/VLR 3 (routing node **3**) in **Fig. 1****.**

Some routing nodes in a network may be configured with a visitor location register to keep track of user(s) and an identifier of the BTS to which the user is connected. For instance, the visitor location register maintains a database having identifiers of users that roam into the area of a particular jurisdiction or area served by the routing node, and the identifiers of the BTS associated with those users. The data stored in the VLR has either been received from the HLR, or received from another VLR or collected from the user equipment over the Radio Access Network (shown as RAN **9** in **Fig. 1**). In practice, for performance reasons, most vendors integrate the VLR directly to the routing node and, where this is not done, the VLR is very tightly linked with the routing node via a proprietary interface. Whenever a routing node detects a new user equipment in its network, in addition to creating a new (database) record in the VLR, it also updates the HLR of the mobile subscriber, apprising it of the new location of that user equipment. If VLR data is corrupted it can lead to serious issues with text messaging and call services. Each base station in the network is served by exactly one VLR, hence a subscriber cannot be present in more than one VLR at a time. Illustrative data stored in the VLR may include: IMSI (the subscriber's identity number), authentication data, MSISDN (the subscriber's phone number), GSM services that the subscriber is allowed to access, access point (GPRS) subscribed, the HLR address of the subscriber.

Routing node **3** allowing UE **1** to communicate with other parts of rest of network (i.e., UE **1** is communicably connected to BTS **2** which is in turn communicably connected with routing node **3**) is referred to as the serving routing node or the visited routing node (interchangeable). The serving routing node shown in the figures, MSC/SGSN/VLR 3 (routing node **3**), is indicated with a star. The VLR of the serving routing node has a database record associated with UE **1.** A routing node that is not serving the user equipment is referred to as the non-serving routing node. Illustrative non-serving nodes are shown as routing nodes **4** and **5.**

In general, a location services client, preferably via a gateway routing node, may transmit a message to the serving routing node to request location information associated with user equipment. Once the address of the serving routing node is determined, a request may be sent to the serving routing node to request location information associated with the user equipment. The routing node may return, if available, the identifier of the BTS to which the user is connected. Alternatively or additionally, the routing node may provide the location estimate, such as geographical information, may give the location of a user as a shape. For instance, an ellipsoid point may be used to provide information on a point on the Earth's surface in terms of latitude and longitude. The identifier of the BTS may be converted into the user's geographical location, for example, in x,y coordinates, using known mappings between a particular BTS's identifier and its location. Accuracy may be on the order of a couple to a few kilometers.

An exemplary LBS/LCS method is illustrated and explained in further detail in relation to **Fig. 1****.** An LBS Platform may include location services client **7** and Gateway Mobile Location Center (GMLC) **8.** GMLC **8** may be configured with functionality required to support LCS. In one Public Land Network (PLMN), there may be more than one GMLC. GMLC **8** is the first node an external LCS client (such as location services client **7**) accesses in a GSM or UMTS network. GMLC **8** may request routing information from the Home Location Register (HLR **6**). In some embodiments, HLR **6** may be replaced with a Home Subscriber Server (HSS) used in IP Multimedia Subsystem.

Message **m1** (LBS Request) is transmitted from location services client **7**, and is received at GMLC **8.** Message **m1** may use any suitable LBS/LCS protocol or format agreed upon between location services client **7** and GMLC **8.** Message **m1** may include an identifier of the user or UE **1**, such that message **m1** may specify the user whose location is requested by location services client **7**. The identifier of the user may be the telephone number of UE **1**, for example, obtained when the user had made a call to an emergency service. The identifier may be any other suitable mobile station identifier, such as International Mobile Station Equipment Identity (IMEI), International Mobile Subscriber Identity (IMSI), Mobile Subscriber ISDN Number (MSISDN), Mobile Station Roaming Number (MSRN), Location Area Identity (LAI), Temporary Mobile Subscriber Identity (TMSI), Local Mobile Subscriber Identity (LMSI), and Cell Identifier (CI). Message **m1**, besides the identifier of the user or UE **1**, may include other information such as quality of service parameters, type of location estimate, type of LBS/LCS request, etc.

In certain embodiments, depending on the type of LBS/LCS request, a privacy and/or authentication check is performed to make sure that location services client **7** has privileges to obtain location information associated with UE **1**. A privacy check may be performed by a separate messaging step(s), initiated by either or both location services client **7** and GMLC **8**, with a register that maintains authorization data for various users. An authentication step may be performed by GMLC **8** or some other suitable entity to ensure that the request originated from a legitimate location services client **7**.

Once **m1** is received, GMLC **8** may process **m1** and extract (if necessary) information from **m1** to generate a Mobile Application Part (MAP) message to be sent to HLR **6**. MAP messages are described as an illustration, it is understood that other types of messages may be used to support LBS/LCS feature.

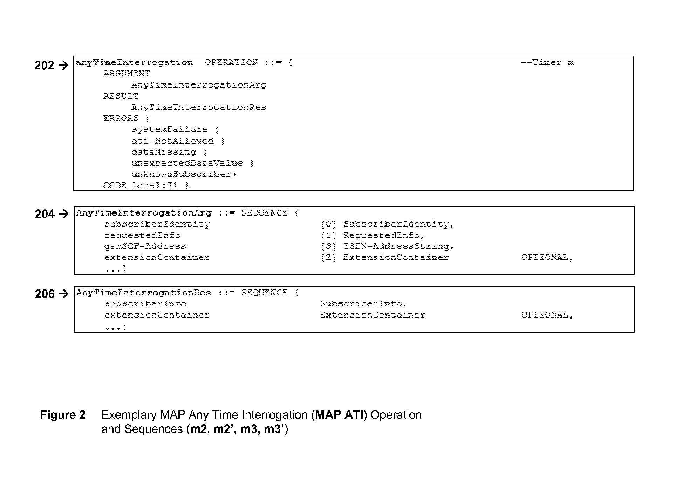

In one embodiment, MAP Any Time Interrogation (ATI) message is used for message **m2** (MAP ATI) sent to HLR **6**. For illustration, **Fig. 2** shows MAP anyTimeInterrogation operation (box **202**), MAP AnyTimeInterrogationArg sequence (box **204**) and MAP AnyTimeInterrogationRes sequence (box **206**). As seen in box **204**, the identity of the user or UE **1** may be provided as "subscriberIdentity". Boxes **202**, **204** and **206** show exemplary data structures that may be transmitted between a gateway routing node and a home location register according to one embodiment of the invention.

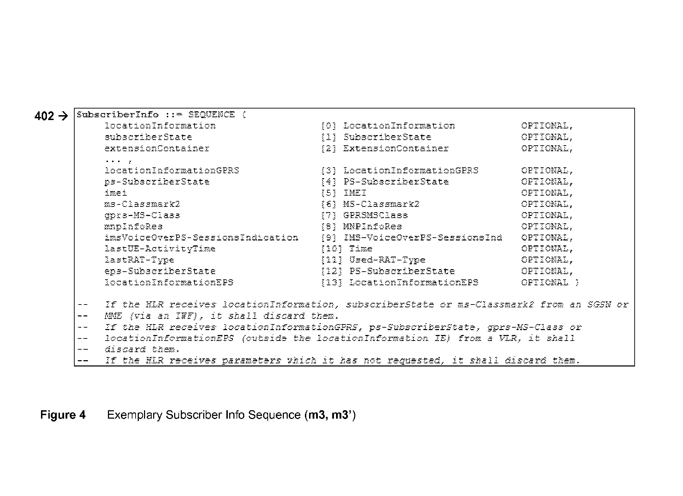

In one embodiment, HLR **6** may maintain the Cell ID of the BTS that UE **1** is attached to, and accordingly returns the Cell ID (e.g., embedded in "locationInformation" of "subscriberInfo" sequence seen in box **402** of Fig. **4**) to GMLC **8** in **m3** (MAP ATI res). If the Cell ID is not readily available or needs to be updated/checked, HLR **6** may transmit a message to serving routing node **3** to request the Cell ID (e.g., via a MAP Provide Subscriber Location message). Upon receiving the Cell ID, it is forwarded to location services client **7** as a LBS/LCS response in **m8**. For illustration, **Fig. 4** shows an illustrative data structure according to one embodiment of the invention, whereby "SubscriberInfo" sequence returned in "ProvidesubscriberInfoRes" is shown in box **402**. "SubscriberInfo" includes "locationInformation", which the location information associated with the user or UE **1**.

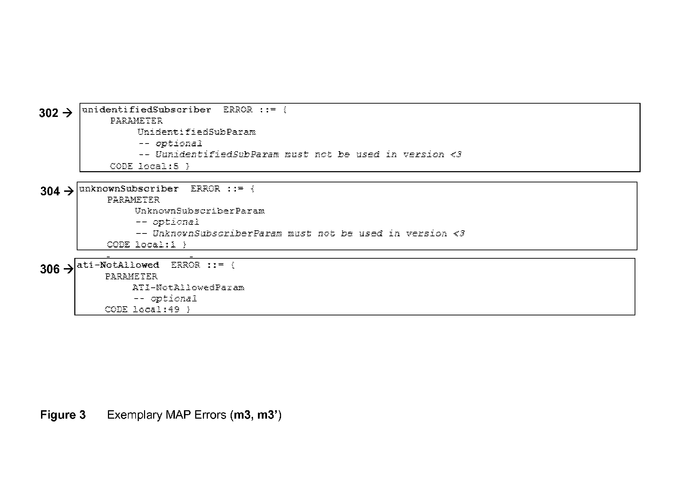

In operation, MAP ATI may work for only subscribers that have a profile maintained in HLR **6**. For example, MAP ATI may return "SubscriberInfo" if the user is a non-roaming user, where subscriber information is maintained in HLR **6**. In some cases, if UE **1** belongs to a foreign operator (or for another reason), and is not maintained by HLR **6**, an error may be returned in **m3** (MAP ATI res) in response to the MAP ATI message of **m2** (MAP ATI). Example errors, such as "unidentifiedSubscriber", "unknownSubscriber" and "ati-NotAllowed" are shown in boxes **302**, **304** and **306** of **Fig. 3**, respectively.

The method of using MAP ATI to obtain location information associated with the user or UE **1** may only work if the user or UE **1** is a non-roaming user (i.e., GMLC **8** is contacting the HLR to which UE **1** is a subscriber) or there is an existing agreement that enables access to a foreign HLR. This implementation has the technical problem where the method and system cannot be used for all users, including roaming users. If UE **1** is a roaming user, the HLR would either or both (1) return an error or (2) not return the location information associated with UE **1**. Different network operators may sign agreements to allow the GMLC belonging to one network operator to contact and retrieve location information associated with roaming users at a foreign HLR, but such negotiations are cumbersome and achieving agreement with all possible foreign operators would be practically impossible. Hence, there is a need for an improved system that can handle LBS/LCS processes for more users, even roaming users belonging to a foreign operator.

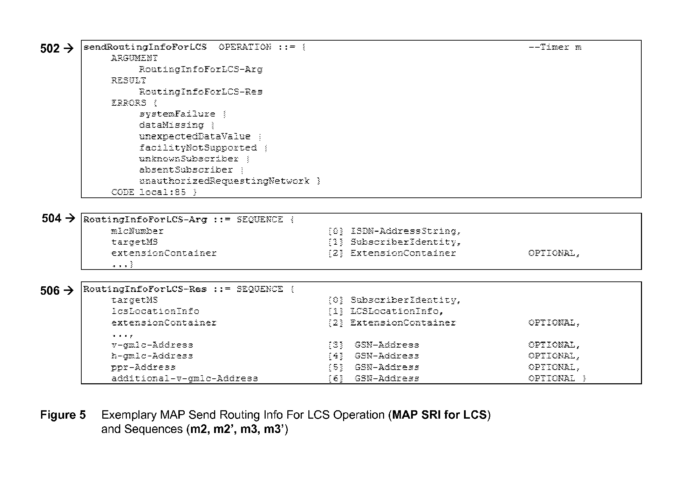

In an alternative embodiment to using MAP ATI, MAP Sending Routing Info for Location Services (SRI for LCS) may be used for message **m2** (MAP SRI). For illustration, **Fig. 5** shows MAP sendRoutingInfoForLCS operation (box **502**), MAP RoutingInfoForLCS-Arg sequence (box **504**) and MAP RoutingInfoForLCS-Res sequence (box **506**). As seen in box **204**, the identity of the user or UE **1** is provided as "subscriberIdentity". In sendRoutingInfoForLCS, the user or UE **1** may be identified by "targetMS" ("SubscriberIdentity"). HLR **6**, upon receiving the MAP SRI for LCS message **m2** may check to see if the user has an LCS/LBS subscription. In some cases, only when the user has an LBS/LCS subscription (with appropriate privacy profile), the determination of the location of the user or UE **1** can continue. If the determination continues, HLR **6** may return information on the serving routing node that the user or UE **1** is attached to in message **m3** (MAP SRI res). For instance, this information on the serving routing node may be provided in "lcsLocationInfo" seen in box **506**. The information may be an address of the serving routing node or any other unique identifier that allows GMLC **6** to contact the serving routing node for location information associated with UE **1**.

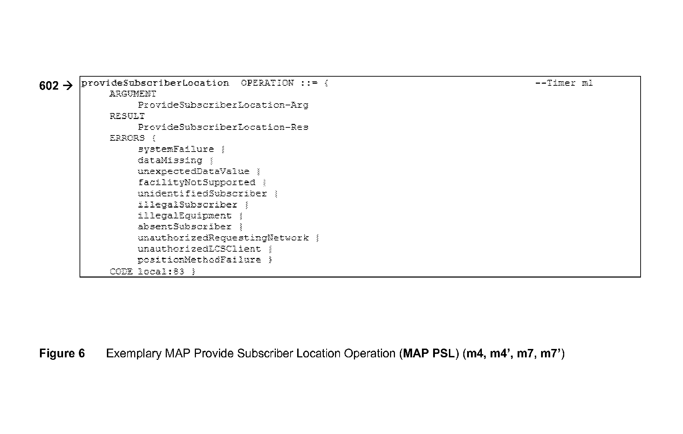

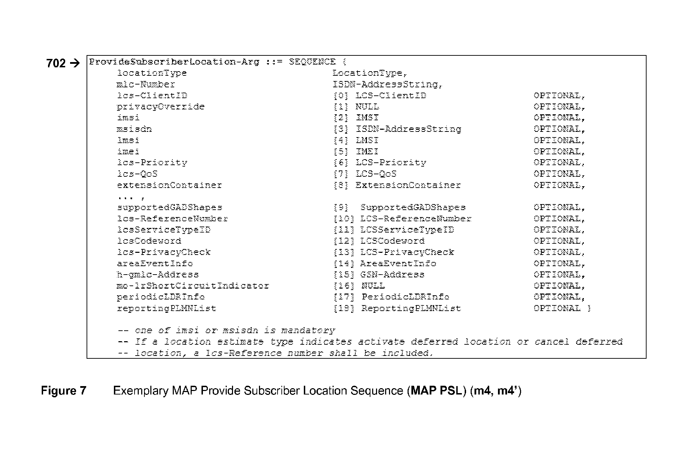

Having the information on the serving routing node, the LBS platform may then request the location information associated with the user or user equipment **1** by sending, for example, MAP Provide Subscriber Location (PSL) to the serving routing node in message **m4** (MAP PSL). For illustration, **Fig. 6** shows an example "provideSubscriberLocation" operation in box **602** according to one embodiment of the invention. **Fig. 7** shows an illustrative "ProvideSubscriberLocation-Arg" argument sequence in box **702** for the provide subscriber location operation according to one embodiment of the invention. Based on the information (e.g., address) about the serving routing node, message **m4** is sent to MSG/SGSN/VLR 3 (routing node **3**). Message **m4** is not sent to non-serving routing nodes **4** and **5**.

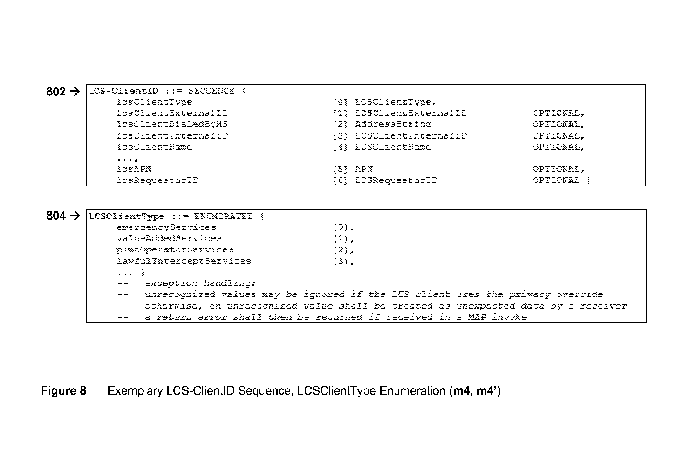

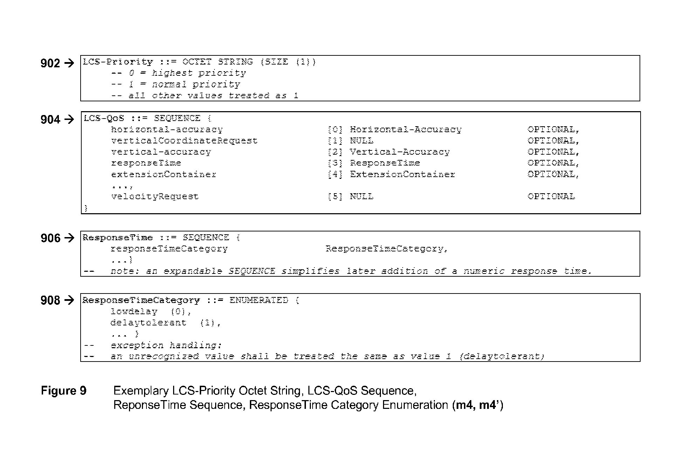

In MAP PSL, the user may be identified by at least one of "imsi", "msisdn", "lmsi" and "imei". Among other parameters, **Figs 8** and **9** show illustrative data structures or parameters that may be provided in a MAP PSL operation. Examples include "LCS-ClientID" sequence, "LCSClientType" enumerated, "LCS-Priority" octet string, "LCS-QoS" sequence, "ResponseTime" sequence, "ResponseTimeCatetory" enumerated, seen in boxes **802**, **804**, **902**, **904**, **906** and **908**.

In response to message **m4,** serving routing node **3** may optionally page the user (e.g., to update the information on the user's location if UE **1** is not currently in a call) and carry out any necessary authentication/notification procedure (e.g., standardized for LBS/LCS). Serving routing node **3** may involve Radio Access Network (RAN **9**) by sending a location request message **m5** to RAN **9**. Message **m5** (location request) may include the identification of the user or UE **1**. Furthermore, message **m5** may include other parameters such as quality of service, type of location requested, UE **1'**s location capabilities, or any other parameters requested in message **m4**. In response, RAN **9** answers to message **m5** by transmitting message **m6** (location report) to serving routing node **3**, wherein the message **m6** includes the location information associated with the user or UE **1**.

In turn, the serving routing node **3** responds to GMLC **8** with message **m7** (MAP PSL res) to provide location information associated with the user or UE **1** (e.g., as obtained by the transmission/receipt of messages **m5** and **m6**). GMLC **8** processes message **m7** and provides the location information associated with the user or UE **1** to location services client **7**.

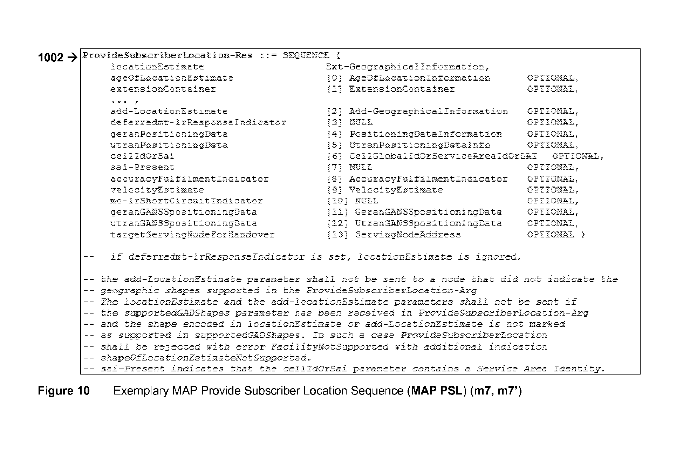

**Fig. 10** shows an illustrative "ProvideSubscriberLocation-Res" sequence that may be used in message **m7** according to one embodiment of the invention. As shown in box **1002**, the "locationEstimate", which is the location information associated with the user or UE **1** is returned to GMLC **8**. GMLC **8** may process "locationEstimate", which may include a Cell ID of BTS **2**, and "locationEstimate" or a derivation thereof may be transmitted back to location services client **7** in message **m8** (LBS/LCS response).

When MAP SRI for LCS in connection with MAP PSL, the LBS/LCS solution requires full LCS support by the entire network (i.e., full support of LCS by HLR **6**, routing nodes **3-5** and RAN **9**). Furthermore, the LBS/LCS solution requires the user to have LCS subscription data in HLR **6**. Moreover, because HLR **6** is involved in the messaging flow, the LBS/LCS solution in this alternative embodiment would not work for roaming users due to the lack of access to the foreign HLR that manages the roaming user. Thus, this LBS/LCS solution would not work for all users, including roaming users.

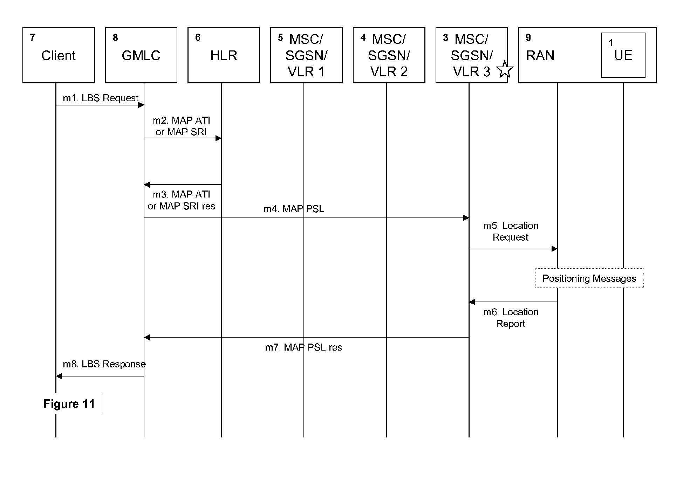

**Fig. 11** shows an illustrative messaging flow of a LBS/LCS according to some embodiments of the invention. The messaging flow illustrates some of the embodiments described in relation to **Fig. 1**.

Routing nodes and roaming users may not necessarily be configured to provide support for LBS/LCS services, such as capabilities outlined by the 3GPP. To provide LBS for emergency services for more users, the LBS is desired to account for roaming users, foreign operators and/or equipment that may not necessarily be configured with full LBS/LCS capabilities. Specifically, the LBS solution is desired to work even for routing nodes that may not provide full LBS/LCS services.

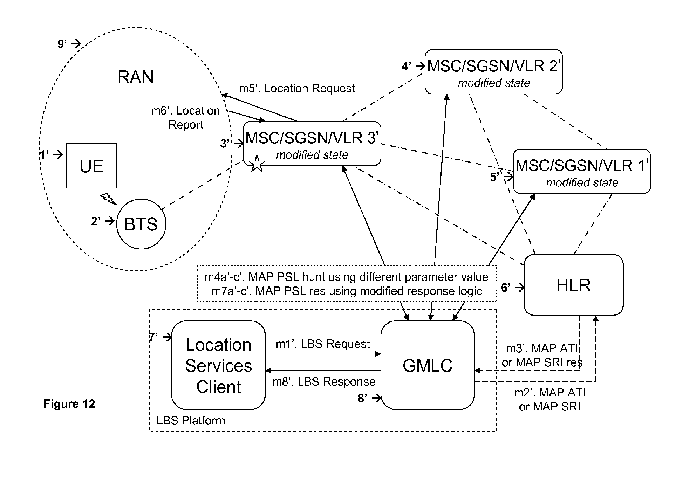

The cell ID positioning methods and systems discussed in relation to, for example, **Fig. 1** or **11**, would generally not work for inbound roaming users belonging to foreign operators. GMLC **8** is generally restricted from accessing user information (e.g., for security reasons) from the HLR belonging to a foreign operator. Furthermore, the routing nodes **3-5**, HLR **6** and RAN **9** may all have to support LBS/LCS. If a user or user equipment is communicably connected to equipment that does not support LBS/LCS, the system cannot retrieve the location information associated with the user or user equipment. Also, if the inbound roaming user does not have a LBS/LCS subscription profile in the HLR, the HLR would not provide the necessary information to carry out LBS/LCS. To alleviate the technical problems associated with the methods and systems discussed above (in relation to **Figs. 1**-**11**), improved method(s) and system(s) are disclosed in relation to **Figs. 12-15**.

**Fig. 12** shows an illustrative implementation of LBS/LCS according to one embodiment of the invention. The improvements are two fold, which may be used independently from or in combination with each other. First, the determination of which of the routing nodes is the serving node may no longer be performed solely at the HLR. Rather, a hunting method is used to determine the serving routing node of the network. Second, the response logic for the routing nodes may be modified such that a suitable response is provided back to the GMLC even if the routing node does not fully support LBS or LCS.

In the system shown in **Fig. 12**, a user or UE **1'** is communicably connected with BTS **2'**. BTS **2'** or a sector thereof may be uniquely identified by an identifier such as a Cell ID, SAI, or the like. LBS/LCS may translate said identifier to a geographical location estimate for positioning purposes. BTS **2'** is communicably connected to one of the routing nodes **3'**, **4'** and **5'**. Depending on the embodiment, routing nodes **3'**, **4'** and **5'** may be implemented in a similar fashion as routing nodes **3**, **4** and **5** of **Fig. 1**. As indicated by a star, routing node 3' is the serving routing node for UE **1'**. In some embodiments, routing node **3'**, **4'** and **5'** may be configured with a modified state or response logic for messages transmitted from GMLC **8'** to routing nodes **3'**, **4'** and **5'**. Depending on the embodiment, GMLC **8'** may be implemented in a similar fashion as GMLC **8** of **Fig. 1**. In some embodiments, GMLC **8'** is implemented with a different method for determining which of the routing node is the serving routing node. RAN **9'** may be implemented in a similar fashion as RAN **9** of **Fig. 1****.** In some embodiments, RAN **9'** is implemented to accommodate the modified response logic in the routing nodes **3'**, **4'** and **5'**.

The LBS/LCS method may begin, at the LBS/LCS Platform, where location services client **7'** transmits message **m1'** (LBS/LCS Request) to GMLC **8'**. Message **m1'** may preferably include identification information associated with the user or UE **1'**. Upon receiving message **m1'**, GMLC **8'**, may directly begin a hunting procedure (e.g., without contacting HLR **6'**) to determine which of the routing nodes **3'**, **4'** and **5'** may be the serving routing node.

The hunting procedure involves the transmission of at least one message, messages **m4a'**, **m4b'** and **m4c'** serially or substantially in parallel to routing nodes of the network. If the routing node is the serving routing node for UE **1'**, the message response would indicate as such to GMLC **8'**, and/or provide the location information associated with UE **1'** (e.g., Cell ID or SAI). If the routing node is a non-serving routing node for UE **1'**, then the routing node would indicate as such and/or return an error to GMLC **8'**. Based on the response(s) received in the hunting method, the serving routing node may be determined. In other words, the hunting method may bypass the HLR (i.e., messaging to the HLR is optional and not necessary). By avoiding HLR interrogation or messaging, the hunting procedure is applicable and workable to more users including roaming users, since the hunting procedure avoids having to contact the HLR of the foreign operator to which a roaming user belongs.

As discussed in relation to **Fig. 1**, the HLR may store information regarding the serving routing node that is serving the user or user equipment. But due to security and/or privacy restrictions, that information is not generally available to the GMLC if the user is a roaming user and the GMLC cannot access the HLR of the foreign operator to which the roaming user belongs. Improving over the method that requires HLR interrogation/messaging, the hunting procedure may determine the serving routing node without having to send a message to the HLR to which the user belongs to or in which the user has a profile/subscription. In some embodiments, the process may be referred to as "polling".

In one embodiment, the hunting procedure is performed serially. In other words, a message is sent to one of the routing nodes to determine whether that one of the routing nodes is the serving routing node. The determination whether that one of the routing node is the serving routing node is based on the response transmitted back in response to the message. For example, the serving routing node would return location information associated with the user equipment (referred herein as a "positive response"), whereas the non-serving routing node would otherwise not return the location information and/or return an error (referred herein as a "negative response"). If a serving node was found, the determination of serving routing node has been made and the hunting procedure is complete. If the serving node has not been found, a next message is sent to another one of the routing nodes to continue to hunting procedure.

In another embodiment, the hunting procedure is performed in parallel, where messages are sent in substantially the same time and the GMLC waits for a response that indicates the routing node is the serving routing node ("positive response").

For illustration, the serial hunting mode is described in detail, where three messages are sent one by one to each of the three routing nodes. The first and second routing nodes messaged were not the serving routing node, and the third routing node was determined to be the serving routing node.

In response to message **m1'**, GMLC **8'** may first transmit message **m4a'** to one of the routing nodes, such as routing node **5'** (MSC/SGSN/VLR 1'). GMLC **8'** may be preconfigured with a list of addresses of the routing nodes in the network. For message **m4a'**, the MAP Provide Subscriber Location (MAP PSL) may be used, as shown in box **602** of **Fig. 6**, using the arguments shown in box **702** of **Fig. 7**. The message **m4a'** (MAP PSL), among other things, may include the identification of the user or UE **1'**. In response, because routing node **5'** is not the serving routing node, routing node **5'** may return message **m7a'** (MAP PSL res) to GMLC **8'** indicating that routing node **5'** is not the serving routing node ("negative response"). In one instance, the message may not return location information associated with the user or UE **1'** (i.e., because a non-serving routing node does not have location information of users the non-serving routing node is not serving). In another instance, the message may alternatively or in addition include an error indicating that the user or user equipment does not have a database record in the VLR.

In response to receiving a negative response from the first routing node, GMLC **8'** determines the address of another routing node in the network and transmits message **m4b'** (MAP PSL) to that routing node, such as routing node **4'**. Because routing node **4'** is also not the serving routing node of UE **1'**, routing node **4'** may return a "negative response" in message **m7b'** (MAP PSL res) to GMLC **8'**. If routing node **4'** was indeed the serving routing node, it would return the location information associated with UE **1'** ("positive response"). The hunting procedure would have ended at the positive response.

In response to receiving a further negative response from the second routing node, GMLC **8'** determines the address of yet another routing node in the network and transmits message **m4c'** (MAP PSL) to that routing node, such as routing node **3'**. Because routing node **3'** may be the serving routing node for UE **1'**, routing node **3'** may provide a positive response in message **m7c'** (MAP PSL res) to GMLC **8'**. Message **m7c'** (MAP PSL res) may include the location information associated with the user or UE **1'**, such as the Cell ID or SAI information or some other type of location estimate. For instance, location information associated with the user or UE **1'** may be included as "locationEstimate" and/or "cellIDOrSAI of the sequence "ProvideSubscriberLocation-Res" seen in box **1002** of **Fig. 10**. As understood by one skilled in the art, other data associated with the location of the user or user equipment may be considered as location information associated with the user or UE **1'**. At this time, upon receiving a "positive response", the hunting process ends.

In the alternative, if routing node **3'** was indeed not the serving routing node, the hunting process continues with another routing node in the network, until a "positive response" is received. If no "positive response" is received for any of the routing nodes in the network, an error or indication may be transmitted to location services client **7'** to indicate that no location information could be determined.

In some embodiments, routing node **3'** maintains location information about users that have roamed into its jurisdiction in the VLR. To obtain location information associated with UE **1'**, routing node **3'** may transmit message **m5'** (Location Request) to RAN **9'**. RAN **9'** may contact UE **1'**, if contact was not already established, to determine location information associated with UE **l'** (referred herein as "positioning messages"). In response, RAN **9'** may transmit message **m6'** to routing node **3'** with location information associated with UE **1'**.

Alternatively to waiting for messages **m7a'-c'** one by one (the serial hunting process), the hunting process may be performed by sending messages **m4a'-c'** at substantially the same time (substantially in parallel), and waiting in parallel for messages **m7a'-c'** to return from the routing nodes. In other words, a plurality of messages may be sent to a plurality of routing nodes before a response is received from any of the routing nodes. Once a "positive response" is received from one of the routing nodes, the hunting process may end (or the hunting process may continue until a response is received from all of the routing nodes). In some embodiments, messaging to or waiting a response from at least a group of the routing nodes is done in parallel (e.g., such as routing nodes that belong to a particular region in the network, or one routing node from each of a plurality of regions in the network).

In some embodiments, the messages based on a hybrid serial and parallel implementation. For example, a time out feature may be configured such that another message is sent to another routing node only if a first response has not been received within a predetermined period of time.

In some embodiments, heuristics may be used to determine the order or grouping of routing nodes that may be contacted/messaged. The heuristics may be based on the identification of the user or UE **1'**. The heuristics may be based on aggregate information about the plurality of routing nodes in the network (e.g., probability that a user may be in a particular cell based on population or use density).

In some embodiments, the hunting process may be preceded by sending a message to HLR **6'** (i.e., MAP ATI or MAP SRI in message **m2'**). While messaging to HLR is optional, GMLC **8'** may utilize message **m2'** to see if any location information associated with the user or UE **1'** (using MAP ATI) or serving routing node information associated with the user or UE **1'** (using MAP SRI). If UE **1'** is a non-roaming user and/or has an LBS/LCS subscription profile in HLR **6'**, HLR **6'** may return location information associated with the user or UE **1'** (using MAP ATI res), or serving routing node information (MAP SRI res) in message **m3'**. In the case that location associated with the user is returned in message **m3'** (MAP ATI res), then GMLC **8'** may then skip the hunting process or any messaging with the routing nodes, and send message **m8'** (LBS/LCS response) to location services client **7'**. In the case that serving routing node information (e.g., identity information and/or address of the serving routing node) is returned in message **m3'** (MAP ATI res), then GMLC **8'** may then send (one) message (e.g. message **m4a'**, MAP PSL) to the serving routing node (e.g., routing node **3'**) to request location information associated with UE **1'**. If UE **1'** is a roaming user belonging to a foreign operator and/or information about the roaming user cannot be accessed through the HLR that maintains the subscription of the roaming user, then HLR **6** may respond by transmitting message **m3'** to GMLC **8'** with an error and/or an indication that the information cannot be accessed or the information is not available. In some embodiments, message **m3'** may lack the location information or serving routing node information. If the location information or serving routing node information cannot be obtained from HLR **6'**, then GMLC **8'** may proceed to execute the hunting process.

The use of MAP PSL is discussed in this disclosure as illustration. One skilled in the art understands that other suitable types of messages serving the essential functions described herein may be used in addition to or in place of MAP PSL messages.

While the hunting process may solve or alleviate the problem of being able to handle users who do not have a subscription profile in HLR **6'** or users whose HLR does not allow interrogation, routing nodes and/or components in RAN **9'** in the network may not support LBS/LCS to support the messaging described. To solve this technical problem, messages (e.g., messages **m4a-c'**) transmitted to routing nodes and/or components in RAN **9'** may be modified to include a (special) parameter such that the appropriate behaviour at the routing node and or components in RAN **9'** is initiated. Furthermore, some of routing nodes of the network and/or components in RAN **9'** may be reconfigured to operate on a modified response logic. As such, routing nodes and/or components in RAN **9'** may respond with the appropriate response messages, even when the routing node and/or components in RAN **9'** does not fully support LBS/LCS. The parameterization and modified response logic may be used independently, alone, and/or in addition to the hunting process.

One objective of the parameterization method is to provide a patch to routing nodes and/or components in RAN **9'** that do not fully support Location Services such that it can at least support message(s) that enables Cell ID positioning to occur (i.e., by modifying the response logic in a routing node's and/or components in RAN **9'** to recognize and act on a new/specific parameter value). At the same time, the parameterization should not disturb the normal behaviour of routing nodes that already support Location Services, such as the MAP Provide Subscriber Location operation.

In some embodiments, a parameter value of a parameter (e.g., in messages **m4a'-c'**) is selected for the parameterization method such that the parameter value is not recognized in 3GPP TS 29.002 V9.1.0 (2010-03), but the parameter has an exception handling feature that enables the routing node to treat the unrecognized parameter as one of the recognized parameters in 3GPP TS 29.002 V9.1.0 (2010-03).

In some embodiments, the unrecognized parameter value (value not recognized in 3GPP TS 29.002 V9.1.0 (2010-03)) may be propagated or forwarded from the routing node to RAN **9'** in message **m5'** (Location Request). In those embodiments, component(s) in RAN **9'** may be configured with modified response logic to handle the unrecognized parameter, such that the component(s) with or without LBS/LCS can desirably provide a location report back to the routing node.

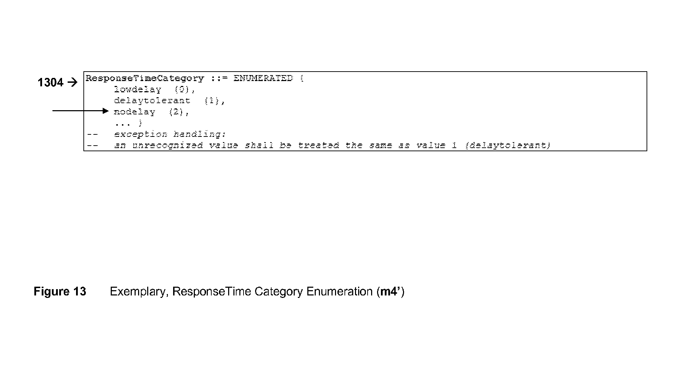

**Fig. 13** shows an illustrative data structure for initiating an adapted response logic at a routing node, according to one embodiment of the invention. For illustration, the specification of the parameters and the parameter values are modified. In the MAP PSL argument for the MAP PSL operation, GMLC **8'** may provide at least one of, among other things, "LCS-Client ID" (box **802**), "LCSClientType" (box **804**), "LCS-Priority" (box **902**), "LCS-QoS" (box **904**). As an illustration, a new parameter value is added to "ResponseTimeCategory" enumeration (seen in box **908**) resulting in the "ResponseTimeCategory" (seen in box **1304**). "ResponseTimeCategory" enumeration may be found within "ResponseTime" sequence, which may be in turn found within "LCS-QoS" sequence of "ProvideSubscriberLocation-Arg". The parameter value added to the enumeration is illustratively shown as "nodelay" (No Delay). The use of the parameter value "nodelay" may function to initiate the modified response logic in a routing node, such that even routing nodes without full LBS/LCS support would return location information associated with UE **1'**. As understood by one skilled in the art, other parameter values, such as parameter values that have not already been reserved for other purposes (e.g., in the 3GPP standard), may be used.

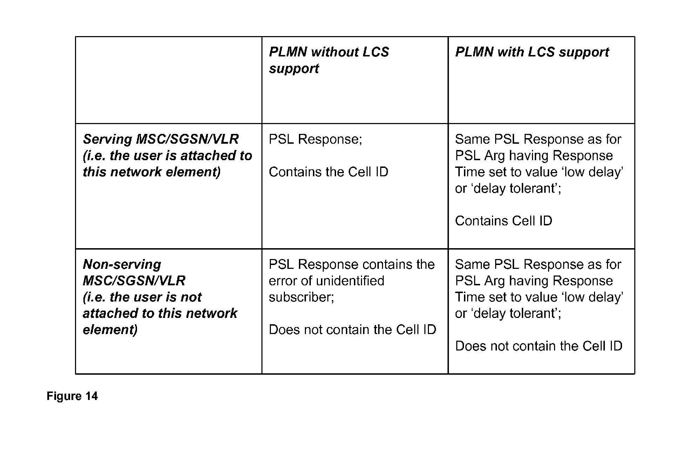

**Fig. 14** shows an illustrative modified response logic at a routing node, according to one embodiment of the invention. As an example, a MAP PSL message with the "nodelay" parameter value is transmitted from GMLC **8'** to a routing node in the network. The routing node receiving said MAP PSL message may recognize the "nodelay" parameter value and enter into a state in the internal state model of the routing node, or process the message in such a way that the routing node reacts according to the modified logic shown in **Fig. 14**.

For a serving routing node in the network without LBS/LCS support, a MAP PSL response including the Cell ID associated with BTS **2'** is returned in accordance with the modified response logic. Without the modified response logic, the serving routing node without LCS support would not be configured to provide the Cell ID. For a non-serving routing node in the network without LBS/LCS support, the routing node may return a MAP PSL response that may (1) return an error of an unidentified subscriber, and/or (2) not include the Cell ID associated with BTS **2'**.

For a serving routing node in the network with LBS/LCS support, a MAP PSL response including the Cell ID associated with BTS **2'** is returned. For backwards compatibility, the MAP PSL response returned may be the same as if the ResponseTimeCategory parameter value was set to "delaytolerant". This behaviour is due to the exception handling feature shown in box **1304** of **Fig. 13****.** As one skilled in the art understands, the exception handling feature may be configured for other parameter values such as "lowdelay" instead of "delaytolerant". Even with the use of the new parameter value, routing nodes already having full support for LBS/LCS can operate without significant changes/reconfigurations to the LBS/LCS behaviour of the routing node. For a non-serving routing node in the network with LBS/LCS support, the routing node may return a MAP PSL response as if the MAP PSL request was made with the "delaytolerant" parameter value, and not include the Cell ID associated with BTS **2'**.

Besides the issue of some routing nodes not supporting LBS/LCS services, some components in RAN **9'** may (also) not support LBS/LCS services and/or may not be configured to handle the special parameter value. Accordingly, some components in RAN **9'** may be patched to handle the special parameter value if the value is used in message **m5'** (Location Request).

In some embodiments, the (special) parameter value is forwarded or propagated in message **m5'** (Location Request). Component(s) in RAN **9'** that already provide some LBS/LCS support, may treat the (special) parameter value as one of the recognized values due to an exception handling feature in the RAN component. Accordingly, those component(s) may return a proper location report in message **m6'** including the cell ID. Component(s) in RAN **9'** that do not provide LBS/LCS support may be patched to handle/recognize the parameter value according to a modified response logic initiated by the parameter value (not shown in **Fig. 14**). Accordingly, those component(s) may return a location report in message **m6'** including the cell ID.

For a RAN component without LBS/LCS support, a location report including the Cell ID associated with BTS **2'** is returned in accordance with a modified response logic in the RAN component. For example, the modified response logic may be triggered or initiated upon recognizing the (special) parameter value, and accordingly enables the RAN component to return the Cell ID. Without the modified response logic, the RAN component without LCS support would not be configured to provide the Cell ID.

For a RAN component with LBS/LCS support, a location report including the Cell ID associated with BTS **2'** is returned. For backwards compatibility, the location response returned may be the same as if the (special) parameter value was set to one of the recognized parameters (parameters normally recognized by the RAN component). This behaviour may be due to an exception handling feature. Even with the use of the new parameter value, a RAN component already having full support for LBS/LCS can operate without significant changes/reconfigurations to the LBS/LCS behaviour of the RAN component.

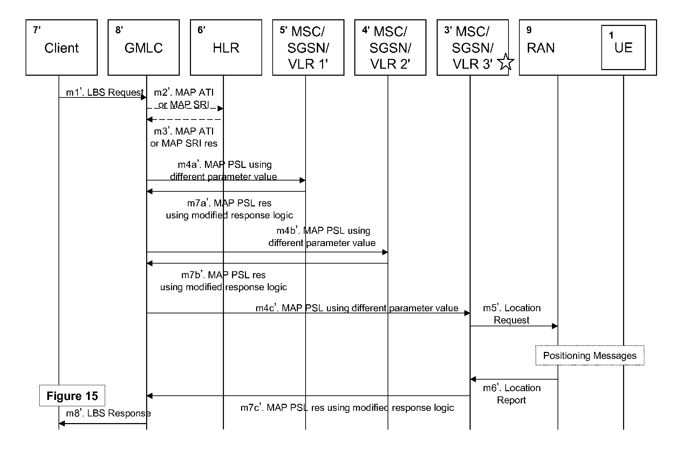

**Fig. 15** shows an illustrative messaging flow of a LBS/LCS according to one embodiment of the invention. The messaging flow illustrates some of the embodiments described in relation to **Figs. 12-14**.

The embodiments disclosed herein substantially correspond to the situation for an emergency LBS/LCS, where privacy concerns is not a significant factor, and the HLR may be bypassed if appropriate. However, the embodiments may be used in a non-emergency type of LBS/LCS, if suitable privacy measures are taken before the location information is obtained.

It is to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define(s) functions of the embodiments (including the methods described herein) and can be contained on a variety of non-transitory computer-readable storage media. Illustrative non-transitory computer-readable storage media include, but are not limited to: (i) non-writable storage media (e.g., read-only memory devices within a computer such as CD-ROM disks readable by a CD-ROM drive, ROM chips or any type of solid-state nonvolatile semiconductor memory) on which information is permanently stored; and (ii) writable storage media (e.g., flash memory, floppy disks within a diskette drive or hard-disk drive or any type of solid-state random-access semiconductor memory) on which alterable information is stored. Moreover, the invention is not limited to the embodiments described above, which may be varied within the scope of the accompanying claims.

## Claims

1. Method for providing location information, preferably for emergency services, associated with mobile user equipment that is wirelessly communicating via a base station to a network, said network comprising a plurality of routing nodes equipped with visitor location registers, said method comprising:
receiving, at a routing node, a message from a gateway node for requesting location information associated with the user equipment, said message comprising the identification of the user equipment and a parameter value for a parameter;
wherein said parameter value is not recognized in 3GPP TS 29.002 V9.1.0 (2010-03) but the parameter has an exception handling feature in 3GPP TS 29.002 V9.1.0 (2010-03) for treating the unrecognized parameter value as one of the recognized parameter values in 3GPP TS 29.002 V9.1.0 (2010-03); and
in response to recognizing the parameter value in the message, if the visitor location register of the routing node has a database record of the user equipment having roamed into the jurisdiction of the routing node, transmitting a response from the routing node to the gateway node, said response including the location information associated with the user equipment in a response to a message for requesting location information associated with the user equipment.

2. Method according to claim 1, further comprising:
in response to recognizing the parameter value in the message, if the visitor location register of the routing node does not have a database record of the user equipment having roamed into the jurisdiction of the routing node, transmitting a response from the routing node to the gateway node, said response (i) not including the location information associated with the user equipment, and/or (ii) indicating that the user has not roamed into the jurisdiction of the routing node.

3. Method according to claim 1 or 2, wherein the message is a Mobile Application Part Provide Subscriber Location message.

4. Method according to claim 1-3, wherein:
the parameter is a response time parameter; and
the parameter value is "no delay" or "nodelay".

5. Method according to claim 1-4, wherein:
the response from the routing node to the gateway node is generated according to a parameter value of "low delay", "lowdelay", "delay tolerant" or "delaytolerant" due to the exception handling feature.

6. Method according to any of claims 1-5, further comprising transmitting a location request to a radio access network to which the user equipment is communicably connected, said location request comprising at least one of: type of location information requested in the message, the identification of the user equipment, the parameter value.

7. Method according to any of claims 1-6, further comprising receiving a location report from the radio access network, said location report comprising the location information associated with the user equipment.

8. Method according to claim 7, wherein the location request comprises the parameter value, and the location report received from the radio access network is generated based at least in part on an exception handling feature in a component of the radio access network for treating the unrecognized parameter value as one of the recognized parameter values in 3GPP TS 29.002 V9.1.0 (2010-03).

9. Method according to any of the claims 1-8, wherein the identification of the user equipment is the telephone number (MSISDN) associated with the subscriber identity module in the user equipment.

10. Method according to any of the claims 1-9, wherein the location information associated with the user equipment comprises cell ID or specific location information of the base station, wherein the location information uniquely identifies the base station.

11. A system for providing location information, preferably for emergency services, associated with mobile user equipment that is wirelessly communicating via a base station to a network, said network comprising a plurality of routing nodes equipped with visitor location registers, said system comprising:
a receiving module configured to receive, at a routing node, a message from a gateway node for requesting location information associated with the user equipment, said message comprising the identification of the user equipment and a parameter value for a parameter;
wherein said parameter value is not recognized in 3GPP TS 29.002 V9.1.0 (2010-03) but the parameter has an exception handling feature in 3GPP TS 29.002 V9.1.0 (2010-03) for treating the unrecognized parameter value as one of the recognized parameter values in 3GPP TS 29.002 V9.1.0 (2010-03); and
a transmitting module, in response to recognizing the parameter value in the message, if the visitor location register of the routing node has a database record of the user equipment having roamed into the jurisdiction of the routing node, configured to transmit a response from the routing node to the gateway node, said response including the location information associated with the user equipment in a response to a message for requesting location information associated with the user equipment.

12. System according to claim 11, the transmitting module further configured to:
in response to recognizing the parameter value in the message, if the visitor location register of the routing node does not have a database record of the user equipment having roamed into the jurisdiction of the routing node, transmit a response from the routing node to the gateway node, said response (i) not including the location information associated with the user equipment, and/or (ii) indicating that the user has not roamed into the jurisdiction of the routing node.

13. Method for retrieving location information, preferably for emergency services, associated with mobile user equipment that is wirelessly communicating via a base station to a network, said network comprising a plurality of routing nodes equipped with visitor location registers, said method comprising:
transmitting, from a gateway node to a routing node, a message for requesting location information associated with the user equipment, said message comprising the identification of the user equipment and a parameter value for a parameter;
wherein said parameter value is not recognized in 3GPP TS 29.002 V9.1.0 (2010-03) but the parameter has an exception handling feature in 3GPP TS 29.002 V9.1.0 (2010-03) for treating the unrecognized parameter value as one of the recognized parameter values in 3GPP TS 29.002 V9.1.0 (2010-03);
if the visitor location register of the routing node has a database record of the user equipment having roamed into the jurisdiction of the routing node, receiving a response from the routing node to the gateway node, said response including the location information associated with the user equipment in a response to a message for requesting location information associated with the user equipment.

14. Method according to claim 13, if the visitor location register of the routing node does not have a database record of the user equipment having roamed into the jurisdiction of the routing node, receiving a response from the routing node to the gateway node, said response (i) not including the location information associated with the user equipment, and/or (ii) indicating that the user has not roamed into the jurisdiction of the routing node; and
transmitting, from a gateway node to another routing node, another message for requesting location information associated with the user equipment, said another message comprising the identification of the user equipment and a parameter value for a parameter.

15. A computer program product, implemented on computer-readable non-transitory storage medium, the computer program product configured for, when run on a computer, executing the method steps according to any one of the claims 1-10 and 13-14.
